# EUROPEAN PATENT SPECIFICATION

(11) **EP 3 060 778 B1**
(45) Date of publication and mention of the grant of the patent: **20.03.2019**
(21) Application number: 14790690.3
(22) Date of filing: 24.10.2014
(51) Int. Cl.: F02C 7/047, F01D 25/02, B64D 15/04, B64D 33/02

(54) **ANTI-ICING SYSTEM FOR AN AIRCRAFT**
ANTI-VEREISUNGSSYSTEM FÜR EIN FLUGZEUG
SYSTÈME DE DÉGIVRAGE POUR UN AÉRONEF

(30) Priority: 25.10.2013 US 201361895540 P
(43) Date of publication of application: 31.08.2016
(73) Proprietor: Short Brothers Plc, Belfast Antrim BT3 9DZ (GB)
(72) Inventor: NEWMAN, Richard, Bangor Down BT20 5LD (GB); MCCAUSLAND, Michael, Belfast Antrim BT11 9QW (GB)
(74) Representative: HGF Limited
(86) International application number: PCT/GB2014/053174
(87) International publication number: WO 2015/059489

(56) References cited:
- FR-A1- 2 953 254
- US-A- 4 688 745
- US-A1- 2002 027 180
- US-A1- 2012 248 249
- US-B1- 6 354 538

## Description

### FIELD OF THE INVENTION

An aspect of the invention relates to an anti-icing system. The anti-icing system may be applied in, for example, an aircraft, in particular for preventing ice formation on an inlet lip skin of an engine nacelle. Other aspects of the invention relate to an aircraft and a method of anti-icing an aircraft.

### BACKGROUND OF THE INVENTION

Aircraft parts may be subject to ice formation, in particular forward-facing surfaces. For example, ice may form on an inlet lip skin of an engine nacelle during flight. Ice that has formed on an aircraft part may alter aerodynamic properties of the aircraft and increase aircraft weight. This may lead to an increase in fuel consumption or require a different control of the aircraft, or both. Most severely, ice formation may lead to a loss of control over the aircraft. Moreover, a piece of ice that has formed may break off and damage an aircraft part. Such damage may then lead to one of the aforementioned consequences.

An aircraft is advantageously provided with an anti-icing system to prevent ice formation on one or more aircraft parts. In general, an anti-icing system heats an aircraft part that may be subject to ice formation, so as to prevent the latter. For that purpose, an anti-icing system may use hot compressed air that can be bled off from a turbine engine. A gas flow path conveys this hot compressed air toward the aircraft part that needs to be heated in order to prevent ice-formation.

An anti-icing system may comprise a so-called piccolo duct arranged along an inner surface of the aircraft part that requires anti-icing. The compressed hot air that has been bled off is applied to the piccolo duct. The piccolo duct comprises a plurality of relative small outlets that project the compressed hot air to the inner surface, which causes heating of the aircraft part that requires anti-icing. However, a piccolo duct adds weight to the aircraft, which causes an increase in fuel consumption.

Patent publication US 4,688,745 describes an anti-icing system for an annular housing at a leading edge of a jet engine. Hot gases, such as air from a hot, high pressure section of the jet engine are directed through a conduit, which enters the annular housing through a bulkhead. The conduit then turns about 90° to a direction tangential to a leading edge annulus. The hot gases that exit the conduit entrain cooler air in the annular housing, causing a larger mass of air to swirl circularly around the annular housing.

Patent publication US2002027180 describes an air inlet cowl for a jet engine equipped with de-icing means. A hollow leading edge of the cowl comprises a mixer for forming, at each moment, a mixture of the stream of hot air being injected and some, previously injected, of the stream of air that is recirculating. This evens out the temperature inside the leading edge eliminating hot spots and optimizing the de-icing.

Patent publication FR2953254 describes a bonnet for the air inlet of jet engine. The bonnet has a hollow leading edge delimiting an internal annular peripheral chamber, closed by an internal partition. A tubular mixer is arranged in the chamber to form a mixture of part of the hot air flow during injection by an injector with part of a recirculation air flow that injects anteriorly. The tubular mixer comprises a helicoidal channel suited to inject the part of the hot air flow at the upstream end of the mixer.

### SUMMARY OF THE INVENTION

There is a need for a solution that allows improved anti-icing efficiency.

In accordance with an aspect of the invention there is provided an anti-icing system according to claim 1 for use within a chamber having an exterior wall of which an outer surface can be subject to ice formation, the anti-icing system comprising:
- a nozzle arranged to inject hot gas within the chamber; and
- a gas-mixing device defining a channel for receiving hot gas from the nozzle, the gas-mixing device comprising a swirl-inducing feature for causing gas from the chamber to be drawn into the channel with a swirling effect when hot gas from the nozzle is injected into the channel.

In such an anti-icing system, the swirling effect contributes to uniformly mixing the hot gas that the nozzle injects with the gas from the chamber that is drawn into the airflow channel. This, in turn, contributes to a moving mass of air in the chamber that has a more uniform temperature distribution. As a result, the exterior wall that requires anti-icing may be more uniformly heated. A smaller quantity of hot gas may then be sufficient to achieve a desired anti-icing effect. Anti-icing efficiency may therefore be improved. In an aircraft where the hot gas is bled off from an engine, this can improve fuel efficiency.

Furthermore, ice formation may be reduced without a substantial penalty in terms of increased weight. An anti-icing system in accordance with the invention can be relatively lightweight, in particular compared with an anti-icing system that comprises a piccolo duct, which adds weight to an aircraft.

The swirl-inducing feature may comprise a profiled inlet of the gas-mixing device. The profiled inlet may comprise triangular-shaped recesses. The triangular-shaped recesses may be uniformly distributed around the profiled inlet.

The swirl-inducing feature may comprise at least one fin located within the channel. The at least one fin may comprise a curved shape.

The gas-mixing device may comprise a mounting sleeve for mounting the gas-mixing device on the nozzle.

The swirl-inducing feature may comprise multiple fins positioned between the mounting sleeve and an inner surface of the channel. The multiple fins may be positioned in an equidistant manner around the mounting sleeve.

The airflow channel may have a converging section that extends from an inlet toward an outlet of the gas-mixing device.

The converging section of the airflow channel may be followed by a diverging section in a direction toward the outlet.

The inlet may have a diameter that is superior to that of the outlet.

Another aspect of the present invention provides an aircraft comprising the anti-icing system as defined hereinbefore.

The aircraft may comprise:
an arrangement for bleeding off compressed hot air from a turbine engine; and a gas flow path for leading the compressed hot air to the nozzle, whereby the compressed hot air that is led to the nozzle constitutes the hot gas.

The chamber may be an annular chamber in an inlet section of an engine nacelle, the exterior wall being an inlet lip skin of the engine nacelle.

Yet another aspect of the present invention provides a method of anti-icing an aircraft part according to claim 13, the aircraft part comprising a chamber having an exterior wall of which an outer surface can be subject to ice formation, the method comprising:
- injecting hot gas from a nozzle into the chamber;
- receiving the hot gas from the nozzle within a channel of a gas-mixing device, the gas-mixing device comprising a swirl-inducing feature for causing gas from the chamber to be drawn into the channel with a swirling effect when hot gas from the nozzle is injected into the channel.

### BRIEF DESCRIPTION OF THE DRAWINGS

For the purpose of illustration, a detailed description of some embodiments of the invention is presented with reference to accompanying drawings.
FIG. 1 is a schematic diagram that illustrates an aircraft as seen from a top view.
FIG. 2 is a schematic diagram that illustrates a cross-section of an engine of the aircraft.
FIG. 3 is a schematic diagram that illustrates a cross-section of an inlet section of a nacelle of the engine, which is provided with an anti-icing system and is present only to assist in the understanding of the invention and is not part of the claimed invention.
FIGS. 4-6 are schematic diagrams that illustrate a first gas-mixing device in the anti-icing system seen from a perspective view, a side view, and a front view, respectively.
FIGS. 7-9 are schematic diagrams that illustrate an alternative first gas-mixing device seen from a perspective view, a side view, and a front view, respectively.
FIGS. 10-12 are schematic diagrams that illustrate a second gas-mixing device seen from a first perspective view, a second perspective view, and a front view, respectively not covered by the claims of the present invention.

### DETAILED DESCRIPTION

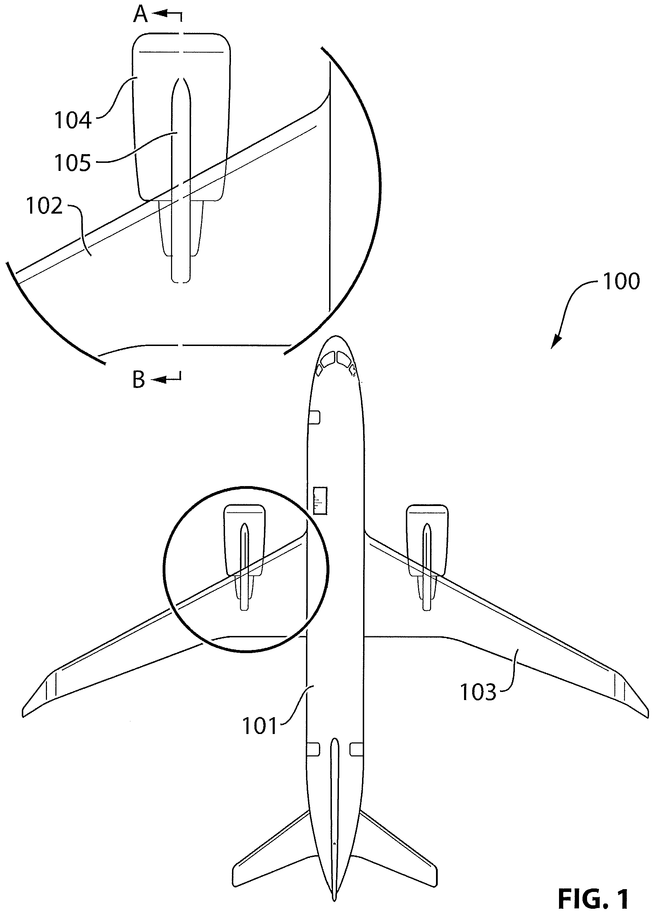

FIG. 1 schematically illustrates an aircraft as seen from a top view. The aircraft 100 comprises a fuselage 101 and two main wings, one on each side of the fuselage 101, a left wing 102 and a right wing 103. The left wing 102 is provided with a turbine engine 104. The turbine engine 104 is suspended from the left wing 102 by means of a pylon 105. The same applies to the right wing 103.

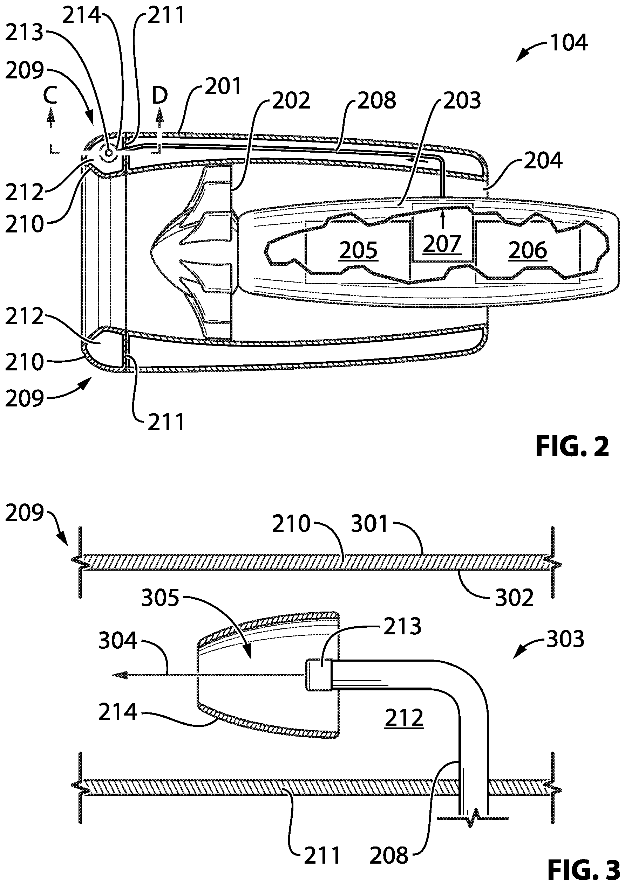

FIG. 2 schematically illustrates a cross section of the turbine engine 104 taken along a cut line A-B indicated in FIG. 1. The turbine engine 104 comprises a nacelle 201. A fan 202 and an engine core 203 are located in the nacelle 201. A bypass duct 204 surrounds the engine core 203. The engine core 203 comprises a compressor assembly 205 and a combustor 206.

The engine core 203 is provided with a bleed off-take arrangement 207 that has an inlet and outlet. The inlet is located between the compressor assembly 205 and the combustor 206. The outlet of the bleed off-take arrangement 207 is coupled to a gas flow path 208. The gas flow path 208 may comprise several ducts, several controllable valves, and, in some embodiments, a cooling device. This cooling device may be a heat exchanger that is located in the bypass duct 204 in the turbine engine 104.

The nacelle 201 comprises an inlet section 209 that has an inlet lip skin 210 and a bulkhead 211 located behind the inlet lip skin 210. The inlet lip skin 210 constitutes a leading edge of the nacelle 201. The inlet lip skin 210 and the bulkhead 211 define a chamber 212 that has an annular shape. This chamber will be referred to as leading edge chamber 212 hereinafter. The inlet lip skin 210 constitutes an exterior wall of the leading edge chamber 212. The bulkhead 211 constitutes an interior wall of the leading edge chamber 212. The terms "exterior" and "interior" relate to the turbine engine 104 and, more particularly, to the nacelle 201 thereof.

A nozzle 213 is located in the leading edge chamber 212 of the nacelle 201. A gas-mixing device 214 is mounted on the nozzle 213. The nozzle 213 is coupled to the bleed off-take arrangement 207 in the turbine engine 104 by means of the gas flow path 208. To that end, the gas flow path 208 may comprise a particular branch that couples the nozzle 213 to the bleed off-take arrangement 207.

FIG. 3 schematically illustrates a cross section of the inlet section 209 of the nacelle 201 taken along a cut line C-D indicated in FIG. 2. The inlet lip skin 210 has an outer surface 301, which can be subject to ice formation, and an inner surface 302, which delimits the leading edge chamber 212. The inlet section 209 of the nacelle 201 is provided with an anti-icing system 303 within the leading edge chamber 212, which is defined by the inlet lip skin 210 and the bulkhead 211.

The anti-icing system 303 comprises the nozzle 213, which is located in the leading edge chamber 212, and the gas-mixing device 214 that is mounted on the nozzle 213. The nozzle 213 has an injection axis 304 that may be substantially parallel to the inlet lip skin 210. The gas-mixing device 214 defines an airflow channel 305 within the leading edge chamber 212 in which the nozzle 213 is located. This airflow channel 305 has a longitudinal center axis that may substantially coincide with the injection axis 304 of the nozzle 213. It should be noted that FIG. 3 illustrates the gas-mixing device 214 in a purely schematic way, disregarding a particular form that the gas-mixing device 214 may have.

In operation, the engine core 203 internally produces compressed hot air, which is available at the inlet of the bleed off-take arrangement 207. A portion of this compressed hot air flows into the gas flow path 208 and reaches the nozzle 213 in the leading edge chamber 212. The nozzle 213 injects the compressed hot air along the inner surface 302 of the inlet lip skin 210. This causes a mass of air to circulate in the leading edge chamber 212, at least partially along the inner surface 302 of the lip skin. This circulating mass of air has a relatively high temperature thanks to the compressed hot air that is injected. The circulating mass of air heats the inlet lip skin 210, which provides an anti-icing effect. This helps to prevent ice formation on the inlet lip skin 210 of the nacelle 201.

More precisely, the nozzle 213 injects the compressed hot air in the airflow channel 305 that the gas-mixing device 214 defines, toward an outlet thereof. The gas-mixing device 214 has a shape that creates a low-pressure at an inlet, which is opposite to the outlet, when the nozzle 213 injects the compressed hot air into the airflow channel 305. This low pressure at the inlet draws air from the leading edge chamber 212 into the airflow channel 305. In the airflow channel 305, this air from the leading edge chamber 212 is caused to enter the channel 305 in a swirling fashion such that it mixes with the compressed hot air that the nozzle 213 injects. This mixing provides a relatively hot air mixture. The gas-mixing device 214 injects this relatively hot air mixture into the leading edge chamber 212 in a direction along the inlet lip skin 210 and the inner surface 302 thereof.

More specifically, the gas-mixing device 214 has a swirl-inducing feature that gives a swirling effect to the air from the leading edge chamber 212 that is drawn into the airflow channel 305. This swirling effect contributes to a uniform mixing of the compressed hot air that the nozzle 213 injects with the air from the leading edge chamber 212 that is drawn into the airflow channel 305. Accordingly, the swirling effect, which occurs within the airflow channel 305, contributes to a uniform temperature distribution in the relatively hot air mixture that the gas-mixing device 214 injects into the leading edge chamber 212. Therefore, the swirling effect contributes to a uniform temperature distribution in the mass of air that circulates in the leading edge chamber 212.

In sum, the gas-mixing device 214 contributes to a heating of the inlet lip skin 210 that is relatively uniform. This, in turn, contributes to efficient anti-icing. A relatively small quantity of the compressed hot air, which is bled off from the turbine engine 104, can be sufficient to achieve a desired anti-icing effect. This contributes to fuel efficiency. Moreover, the anti-icing system 303 can be relatively lightweight, which further contributes to fuel efficiency.

The gas-mixing device 214 may have a diameter comprised between, for example, 1 inch and 4 inches, and a length comprised between, for example, 2 inches and 8 inches. That is, the gas-mixing device 214 may have a diameter comprised between, for example, 25 and 100 millimeters, and a length comprised between, for example, 50 and 200 millimeter. These dimensions can specifically apply to aircraft applications, among other possibilities. It should be appreciated that these dimensions are given for example only, and that other dimensions are possible without departing from the present invention.

The gas-mixing device 214 may be at least partially formed of one or more materials such as, for example, Inconel™ type alloys, stainless steel, or titanium; Inconel being a trademark of Special Metals Corporation.

The swirl-inducing feature of the gas-mixing device 214 may take numerous forms such as, for example, a shape, one or more fins, or a profiled inlet, or any combination of these. Some examples will be provided hereinafter.

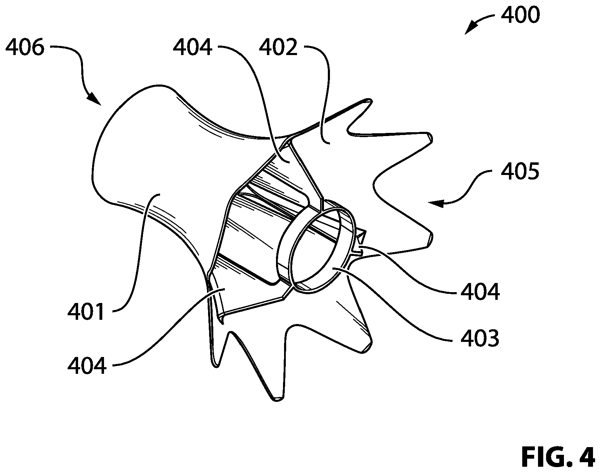

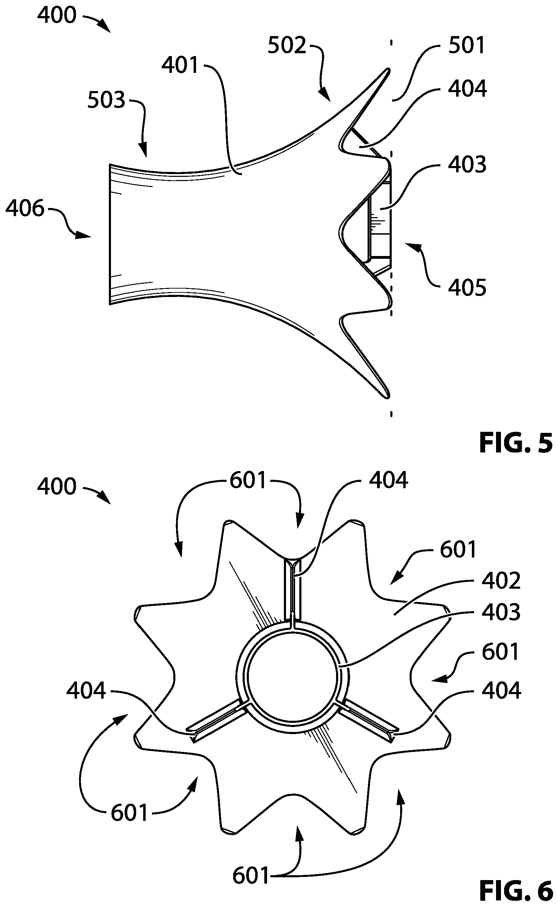

FIGS. 4-6 schematically illustrate a first embodiment of the gas-mixing device 214 which will be referred to as first gas-mixing device 400 hereinafter for reasons of convenience. FIG. 4 schematically illustrates a perspective view of the first gas-mixing device 400. FIG. 5 schematically illustrates a side view of the first gas-mixing device 400. FIG. 6 schematically illustrates a front view of the first gas-mixing device 400.

The first gas-mixing device 400 is in the form of a sleeve-like structure, which comprises a main sleeve 401. An inner surface 402 of the main sleeve 401 defines an airflow channel. The first gas-mixing device 400 further comprises a mounting sleeve 403 for mounting the first gas-mixing device 400 on a nozzle, such as the nozzle 213 illustrated in FIGS. 2 and 3. The main sleeve 401 is fixed to the mounting sleeve 403 by means of various fixation fins 404.

The mounting sleeve 403 is located at an inlet 405 of the first gas-mixing device 400. In more detail, FIG. 5 schematically indicates an inlet plane 501 defined by various extremities of the inlet 405 of the first gas-mixing device 400. The mounting sleeve 403 may be substantially located in this inlet plane 501 as illustrated in FIG. 5, although other locations are possible.

The first gas-mixing device 400 has an outlet 406 that is opposite to the inlet 405. The airflow channel extends between the inlet 405 and the outlet 406. The inlet 405 has a diameter that is superior to that of the outlet 406. The first gas-mixing device 400 can be mounted on a nozzle, via the mounting sleeve 403, such that the nozzle can inject hot gas, which may have a supra-atmospheric pressure, into the airflow channel toward the outlet 406.

The main sleeve 401 is shaped so that the airflow channel has a converging section 502 that extends from the inlet 405 toward the outlet 406. The converging section 502 is followed by a diverging section 503 in a direction toward the outlet 406. The diverging section 503 can extend up to the outlet 406. The airflow channel thus provides a converging action that is followed by a diverging action.

The converging action, which the converging section 502 provides, causes air to be drawn into the airflow channel when the nozzle injects hot gas into the airflow channel, as mentioned hereinbefore. Since the diameter of the inlet 405 is superior to that of the outlet 406, the converging action is stronger than the diverging action.

More specifically, the inlet 405 is profiled: the main sleeve 401 comprises various recesses 601 at the inlet 405. These recesses 601 can be triangular shaped as illustrated in FIGS. 4-6, although other shapes are possible. Moreover, the recesses 601 are uniformly distributed around the inlet 405 of the first gas-mixing device 400. The recesses 601 cause the air that is drawn into the airflow channel to have a swirling effect. This swirling effect contributes to a more uniform mixing within the channel of the gas from the chamber with the hot air injected into the channel by the nozzle. This uniform mixing helps to achieve a relatively high anti-icing efficiency and, therefore, fuel economy, as explained hereinbefore.

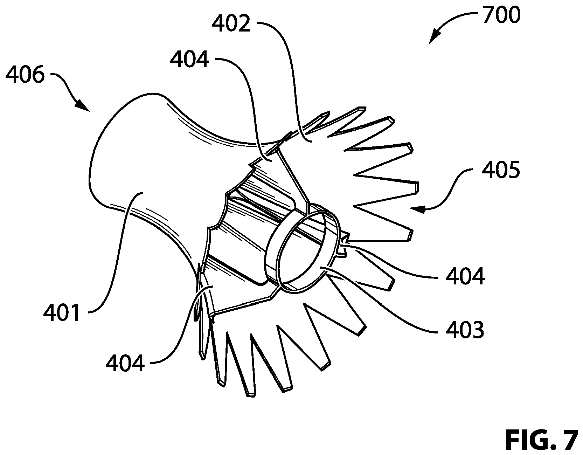

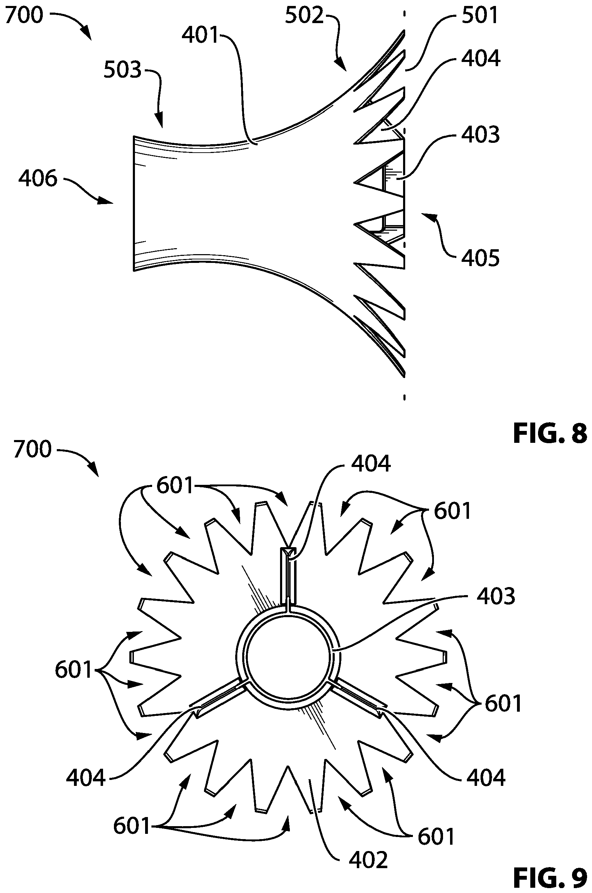

FIGS. 7-9 schematically illustrate an alternative to the first embodiment of the gas-mixing device, which will be referred to as alternative first gas-mixing device 700 hereinafter for reasons of convenience. FIG. 7 schematically illustrates a perspective view of the alternative first gas-mixing device 700. FIG. 8 schematically illustrates a side view of the alternative first gas-mixing device 700. FIG. 9 schematically illustrates a front view of the alternative first gas-mixing device 700.

The alternative first gas-mixing device 700 is similar to the first gas-mixing device 400. Therefore, like elements are denoted by identical reference signs. A difference is that the alternative first gas-mixing device 700 comprises more recesses 601 at the inlet 405. More precisely, the first gas-mixing device 400 comprises 8 recesses 601, whereas the alternative first gas-mixing device 700 comprises 18 recesses 601. Moreover, these 18 recesses 601 are smaller and more densely distributed around the inlet 405. In this example too, the 18 recesses 601 are triangular shaped, although other shapes are possible. The 18 recesses 601 cause a swirling effect too, as described hereinbefore.

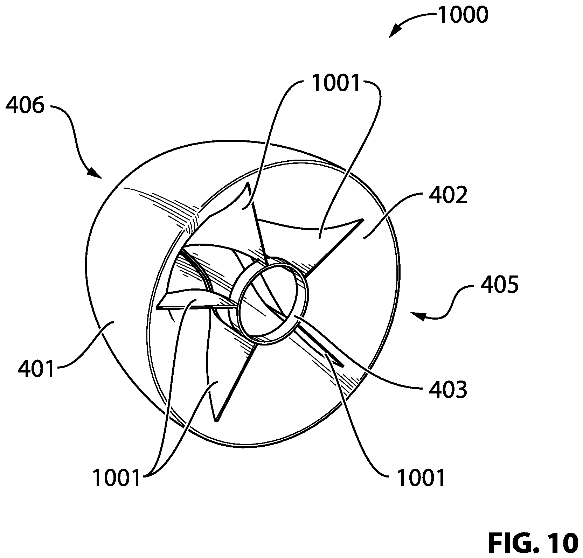

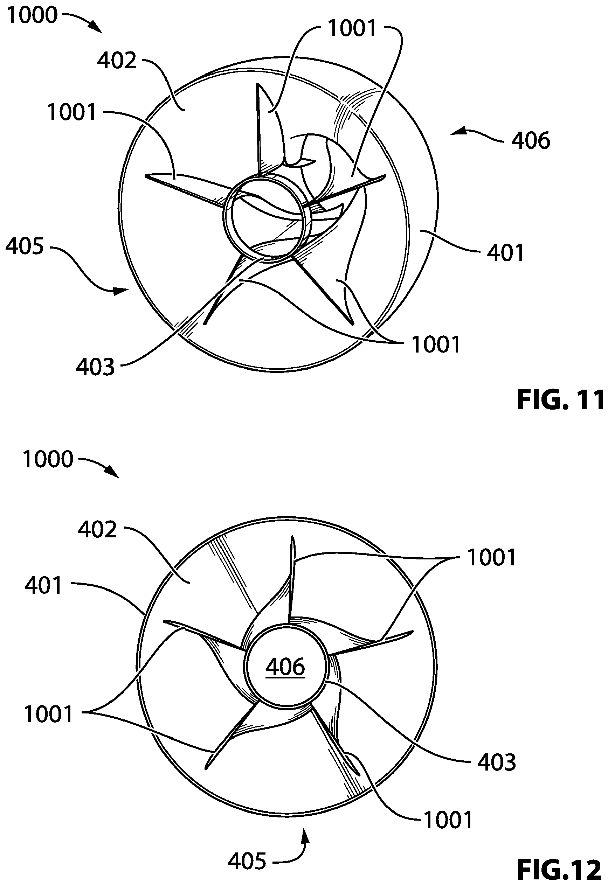

FIGS. 10-12 schematically illustrate a second embodiment of the gas-mixing device 214, which will be referred to as second gas-mixing device 1000 hereinafter for reasons of convenience and which is not covered by the claims of the present invention. FIG. 10 schematically illustrates a first perspective view of the second gas-mixing device 1000. FIG. 11 schematically illustrates a second perspective view of the second gas-mixing device 1000. FIG. 12 schematically illustrates a front view of the second gas-mixing device 1000.

The second gas-mixing device 1000 has some similarities with the first gas-mixing device 400 described hereinbefore. The second gas-mixing device 1000 is also in the form of a sleeve-like structure comprising a main sleeve 401 of which an inner surface 402 defines an airflow channel. The second gas-mixing device 1000 further also comprises a mounting sleeve 403 for mounting the second gas-mixing device 1000 on a nozzle 213, such as the nozzle 213 illustrated in FIGS. 2 and 3.

Further similarities are as follows. The mounting sleeve 403 is also located at an inlet 405 of the second gas-mixing device 1000 and, more precisely, in an inlet plane as described hereinbefore, although other locations are possible. An airflow channel extends between the inlet 405 and an outlet 406 of the second gas-mixing device 1000. The inlet 405 has a diameter that is superior to that of the outlet 406. The second gas-mixing device 1000 can be mounted on a nozzle, via the mounting sleeve 403, such that the nozzle can inject hot gas, which may have a supra-atmospheric pressure, into the airflow channel toward the outlet 406.

A main difference between the second gas-mixing component 1000, which is not covered by the claims of the present invention, illustrated in FIGS. 10-12 and the first gas-mixing component 400 illustrated in FIGS. 4-6 is that for the second gas-mixing component 1000 the main sleeve 401 is fixed to the mounting sleeve 403 by means of various fixation fins 1001 that are curved shaped. These curved-shaped fixation fins 1001 may also be regarded as screw-shaped fins, bent-shaped-fins, which are present in the airflow channel. The curved-shaped fixation fins 1001 cause air that is drawn into the airflow channel to have a swirling effect. This swirling effect contributes to a more uniform mixing within the channel of the gas from the chamber with the hot air injected into the channel by the nozzle. This uniform mixing helps to achieve a relatively high anti-icing efficiency and, therefore, fuel economy, as explained hereinbefore.

Another difference is that the main sleeve 401 of the second gas-mixing device 1000 is shaped so that the airflow channel is entirely converging from the inlet 405 to the outlet 406. Stated otherwise, the airflow channel has no diverging section 503, but only a converging section 502 in which the curved-shaped fixation fins 1001 are arranged. However, in an alternative embodiment, there could also be a diverging section.

Yet other embodiments of the gas-mixing device 214 illustrated in FIG. 3 may comprise a combination of features of the first gas-mixing device 400 and the second gas-mixing device 1000 described hereinbefore. In particular, such an embodiment may comprise a profiled inlet, such as an inlet that has various recesses, as well as curved-shaped fins in an airflow channel that extends between the inlet and an outlet. The profiled inlet and the curved-shaped fins both provide a swirling effect within the gas-mixing device, which can be relatively strong due to a combination of the aforementioned features.

Yet other embodiments may differ from the embodiments described hereinbefore in that a mounting sleeve is located outside an inlet plane defined by one or more extremities at an inlet. That is, referring to FIG.5, the mounting sleeve 403 may be shifted inwardly with respect to the inlet plane 501. Alternatively, the mounting sleeve 403 may be shifted outwardly with respect to the inlet plane 501. In either case, an inward or an outward location of the mounting sleeve, there may be an offset comprised between, for example, 0 and 10 millimeters (mm) with respect to the inlet plane. A location of the mounting sleeve with respect to the inlet plane that is optimal in terms of anti-icing efficiency may be found empirically.

Referring to FIGS. 2 and 3, the nozzle 213 and the gas-mixing device 214 mounted thereon may be slightly inclined with respect to the inner surface 302 of the inlet lip skin 210. Such an inclination may be in terms of azimuth or elevation, or both. That is, the injection axis 304 need not be perfectly parallel with the inner surface 302 of the inlet lip skin 210 at a location in the leading edge chamber 212 where the nozzle 213 is present. A slight inclination that is optimal in terms of anti-icing efficiency may be found empirically.

The detailed description of some embodiments presented hereinbefore with reference to the drawings, is merely an illustration of the invention and the additional features, which are defined in the claims. The invention can be implemented in numerous different ways. In order to illustrate this, some alternatives are briefly indicated.

The invention may be applied in various types of products or methods related to anti-icing, in particular in aircrafts. Although the description hereinbefore presents embodiments that concern anti-icing of an inlet lip skin of an engine nacelle, the invention may be used to prevent ice formation on other aircraft parts.

There are numerous ways of obtaining hot gas, which can be used in for anti-icing. Although the description hereinbefore presents embodiments in which the hot gas is obtained by bleeding off compressed hot air from a turbine engine, the hot gas may be obtained from other types of sources.

There are numerous ways of implementing a gas-mixing device in accordance with the invention, which draws in air with a swirling effect. For example, a profiled inlet may comprise a swirl-inducing feature other than recesses, such as, for example, a profiled surface. Although the description hereinbefore presents embodiments in which recesses are triangular shaped, other shapes of recesses can provide the swirling effect such as, for example, half-ring shaped recesses. Likewise, there are numerous possible shapes for fins within the gas-mixing device that can provide the swirling effect. Such fins need not necessarily have a fixation function.

The term "aircraft" should be understood in a broad sense. The term may embrace any device that is capable of moving through the air.

In general, there are numerous different ways of implementing the invention, whereby different implementations may have different topologies. In any given topology, a single module may carry out several functions, or several modules may jointly carry out a single function. In this respect, the drawings are very diagrammatic.

The remarks made hereinbefore demonstrate that the detailed description of some embodiments presented with reference to the drawings, is an illustration of the invention rather than a limitation. The invention can be implemented in numerous alternative ways that are within the scope of the appended claims. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. An anti-icing system (303) for use within a chamber (212) of an aircraft having an exterior wall (210) of which an outer surface (301) can be subject to ice formation, the anti-icing system comprising:
- a nozzle (213) arranged to inject hot gas within the chamber; and
- a gas-mixing device (214) defining an inlet (405), an outlet (406) and an airflow channel (305) extending between the inlet (405) and the outlet (406) for receiving hot gas from the nozzle, the gas-mixing device comprising a swirl-inducing feature (601, 1001) for causing gas from the chamber to be drawn into the airflow channel (305) with a swirling effect when hot gas from the nozzle is injected into the airflow channel (305), wherein the swirl-inducing feature (601, 1001) comprises various recesses (601) at the inlet of the gas-mixing device, **characterised in that** the airflow channel (305) has a converging section (502) that extends from the inlet (405) toward the outlet (406) of the gas-mixing device (214), wherein the converging section (502) of the airflow channel (305) is followed by a diverging section (503) in a direction toward the outlet (406) and wherein the inlet (405) has a diameter that is superior to that of the outlet (406).

2. The anti-icing system according to claim 1 wherein the plurality of recesses (601) defines a profiled inlet (405) of the gas-mixing device (214).

3. The anti-icing system according to claim 2, wherein the profiled inlet (405) comprises triangular-shaped recesses (601).

4. The anti-icing system according to claim 3, wherein the triangular-shaped recesses (601) are uniformly distributed around the profiled inlet (405).

5. The anti-icing system according to claim 1, wherein the swirl-inducing feature comprises at least one fin (1001) located within the channel (305).

6. The anti-icing system according to claim 5, wherein the at least one fin (1001) comprises a curved shape.

7. The anti-icing system according to claim 1, wherein the gas-mixing device (214) comprises a mounting sleeve (403) for mounting the gas-mixing device on the nozzle (213).

8. The anti-icing system according to claim 7, wherein the swirl-inducing feature comprises multiple fins (1001) positioned between the mounting sleeve (403) and an inner surface (402) of the channel (305).

9. The anti-icing system according to claim 8, wherein the multiple fins (1001) are positioned in an equidistant manner around the mounting sleeve (403).

10. An aircraft (100) comprising the anti-icing system (303) according to claim 1.

11. The aircraft according to claim 10, comprising:
- an arrangement (207) for bleeding off compressed hot air from a turbine engine (104); and
- a gas flow path (208) for leading the compressed hot air to the nozzle (213), whereby the compressed hot air that is led to the nozzle constitutes the hot gas.

12. An aircraft according to claim 11, wherein the chamber (212) is an annular chamber in an inlet section (209) of an engine nacelle (201), the exterior wall (210) being an inlet lip skin of the engine nacelle.

13. A method of anti-icing an aircraft part (201), the aircraft part comprising a chamber (212) having an exterior wall (210) of which an outer surface (301) can be subject to ice formation, the method comprising:
- injecting hot gas from a nozzle into the chamber;
- receiving the hot gas from the nozzle within a channel (305) of a gas-mixing device, the channel (305) extending between an inlet (405) and an outlet (406) of the gas-mixing device, the gas-mixing device comprising a swirl-inducing feature for causing gas from the chamber to be drawn into the channel (305) with a swirling effect when hot gas from the nozzle is injected into the channel (305), wherein the swirl-inducing feature (601, 1001) comprises various recesses (601) at the inlet of the gas-mixing device, **characterised in that** the airflow channel (305) has a converging section (502) that extends from the inlet (405) toward the outlet (406) of the gas-mixing device (214), wherein the converging section (502) of the airflow channel (305) is followed by a diverging section (503) in a direction toward the outlet (406) and wherein the inlet (405) has a diameter that is superior to that of the outlet (406).

## Patentansprüche

1. Enteisungssystem (303) zur Verwendung innerhalb einer Kammer (212) eines Flugzeugs mit einer Außenwand (210), von der eine Außenfläche (301) einer Eisbildung ausgesetzt werden kann, wobei das Enteisungssystem umfasst:
- eine Düse (213), die angeordnet wird, Heißgas in die Kammer zu injizieren; und
- eine Gasmischeinheit (214), die einen Einlass (405), einen Auslass (406) und einen Luftstromkanal (305) definiert, der sich zwischen dem Einlass (405) und dem Auslass (406) zum Empfangen von Heißgas aus der Düse erstreckt, wobei die Gasmischeinheit ein wirbelinduzierendes Merkmal (601, 1001) umfasst, um zu bewirken, dass Gas aus der Kammer mit einem Wirbeleffekt in den Luftstromkanal (305) gelenkt wird, wenn Heißgas aus der Düse in den Luftstromkanal (305) injiziert wird, wobei das wirbelinduzierende Merkmal (601, 1001) bei dem Einlass der Gasmischeinheit verschiedene Aussparungen (601) umfasst, **dadurch gekennzeichnet, dass** der Luftstromkanal (305) einen zusammenlaufenden Abschnitt (502) aufweist, der sich von dem Einlass (405) in Richtung des Auslasses (406) der Gasmischeinheit (214) erstreckt, wobei dem zusammenlaufenden Abschnitt (502) des Luftstromkanals (305) ein auseinanderlaufender Abschnitt (503) in einer Richtung zu dem Auslass (406) folgt und wobei der Einlass (405) einen Durchmesser aufweist, der besser als der des Auslasses (406) ist.

2. Enteisungssystem nach Anspruch 1, wobei die Vielzahl von Aussparungen (601) einen profilierten Einlass (405) der Gasmischeinheit (214) definiert.

3. Enteisungssystem nach Anspruch 2, wobei der profilierte Einlass (405) dreieckig ausgeformte Aussparungen (601) umfasst.

4. Enteisungssystem nach Anspruch 3, wobei die dreieckig ausgeformten Aussparungen (601) gleichförmig um den profilierten Einlass (405) herum verteilt werden.

5. Enteisungssystem nach Anspruch 1, wobei das wirbelinduzierende Merkmal mindestens eine innerhalb des Kanals (305) angeordnete Leitfahne (1001) umfasst.

6. Enteisungssystem nach Anspruch 5, wobei die mindestens eine Leitfahne (1001) eine Kurvenform umfasst.

7. Enteisungssystem nach Anspruch 1, wobei die Gasmischeinheit (214) eine Montagemuffe (403) zum Montieren der Gasmischeinheit auf der Düse (213) umfasst.

8. Enteisungssystem nach Anspruch 7, wobei das wirbelinduzierende Merkmal mehrere Leitfahnen (1001) umfasst, die zwischen der Montagemuffe (403) und einer Innenfläche (402) des Kanals (305) positioniert werden.

9. Enteisungssystem nach Anspruch 8, wobei die mehreren Leitfahnen (1001) in einer abstandsgleichen Weise um die Montagemuffe (403) herum positioniert werden.

10. Flugzeug (100), das das Enteisungssystem (303) nach Anspruch 1 umfasst.

11. Flugzeug nach Anspruch 10, das umfasst:
- eine Anordnung (207) zum Entlüften von komprimierter Heißluft aus einem Turbinenmotor (104); und
- einen Gasströmungsweg (208) zum Führen der komprimierten Heißluft an die Düse (213), wobei die komprimierte Heißluft, die an die Düse geführt wird, das Heißgas bildet.

12. Flugzeug nach Anspruch 11, wobei die Kammer (212) eine ringförmige Kammer in einem Einlassabschnitt (209) einer Motorgondel (201) ist, wobei die Außenwand (210) eine Einlasskantenaußenhaut der Motorgondel ist.

13. Verfahren zum Enteisen eines Flugzeugteils (201), wobei das Flugzeugteil eine Kammer (212) mit einer Außenwand (210) umfasst, von der eine Außenfläche (301) einer Eisbildung ausgesetzt werden kann, wobei das Verfahren umfasst:
- ein Injizieren von Heißgas aus einer Düse in die Kammer;
- ein Empfangen des Heißgases aus der Düse innerhalb eines Kanals (305) einer Gasmischeinheit, wobei sich der Kanal (305) zwischen einem Einlass (405) und einem Auslass (406) der Gasmischeinheit erstreckt, wobei die Gasmischeinheit ein wirbelinduzierendes Merkmal umfasst, um zu bewirken, dass Gas aus der Kammer mit einem Wirbeleffekt in den Kanal (305) gelenkt wird, wenn Heißgas aus der Düse in den Kanal (305) injiziert wird, wobei das wirbelinduzierende Merkmal (601, 1001) verschiedene Aussparungen (601) an dem Einlass der Gasmischeinheit umfasst, **dadurch gekennzeichnet, dass**
der Luftstromkanal (305) einen zusammenlaufenden Abschnitt (502) aufweist, der sich von dem Einlass (405) in Richtung des Auslasses (406) der Gasmischeinheit (214) erstreckt, wobei dem zusammenlaufenden Abschnitt (502) des Luftstromkanals (305) ein auseinanderlaufender Abschnitt (503) in einer Richtung zu dem Auslass (406) folgt und wobei der Einlass (405) einen Durchmesser aufweist, der besser als der des Auslasses (406) ist.

## Revendications

1. Système de dégivrage (303) destiné à être utilisé dans une chambre (212) d'un aéronef possédant une paroi extérieure (210) dont une surface externe (301) peut être sujette à la formation de givre, ledit système de dégivrage comprenant :
- une buse (213) agencée pour injecter un gaz chaud dans la chambre ; et
- un dispositif de mélange de gaz (214) définissant une entrée (405), une sortie (406) et un canal d'écoulement d'air (305) s'étendant entre l'entrée (405) et la sortie (406) pour recevoir le gaz chaud provenant de la buse, le dispositif de mélange de gaz comprenant un élément induisant un tourbillonnement (601, 1001) pour provoquer une aspiration d'un gaz provenant de la chambre dans le canal d'écoulement d'air (305) avec un effet tourbillonnant lorsque le gaz chaud provenant de la buse est injecté dans le canal d'écoulement d'air (305), ledit élément induisant un tourbillonnement (601, 1001) comprenant divers évidements (601) au niveau de l'entrée du dispositif de mélange de gaz, **caractérisé en ce que** le canal d'écoulement d'air (305) possède une section convergente (502) qui s'étend à partir de l'entrée (405) vers la sortie (406) du dispositif de mélange de gaz (214), ladite section convergente (502) du canal d'écoulement d'air (305) étant suivie d'une section divergente (503) selon une direction allant vers la sortie (406) et ladite entrée (405) possédant un diamètre qui est supérieur à celui de la sortie (406).

2. Système de dégivrage selon la revendication 1, ladite pluralité d'évidements (601) définissant une entrée profilée (405) du dispositif de mélange de gaz (214).

3. Système de dégivrage selon la revendication 2, ladite entrée profilée (405) comprenant des évidements (601) de forme triangulaire.

4. Système de dégivrage selon la revendication 3, lesdits évidements (601) de forme triangulaire étant uniformément répartis autour de l'entrée profilée (405).

5. Système de dégivrage selon la revendication 1, ledit élément induisant un tourbillonnement comprenant au moins une ailette (1001) située dans le canal (305).

6. Système de dégivrage selon la revendication 5, ladite au moins une ailette (1001) comprenant une forme incurvée.

7. Système de dégivrage selon la revendication 1, ledit dispositif de mélange de gaz (214) comprenant un manchon de montage (403) permettant le montage du dispositif de mélange de gaz sur la buse (213).

8. Système de dégivrage selon la revendication 7, ledit élément induisant un tourbillonnement comprenant de multiples ailettes (1001) positionnées entre le manchon de montage (403) et une surface interne (402) du canal (305).

9. Système de dégivrage selon la revendication 8, lesdites multiples ailettes (1001) étant positionnées de manière équidistante autour du manchon de montage (403).

10. Aéronef (100) comprenant le système de dégivrage (303) selon la revendication 1.

11. Aéronef selon la revendication 10, comprenant :
- un agencement (207) destiné à purger l'air chaud comprimé provenant d'un moteur à turbine (104) ; et
- un trajet d'écoulement de gaz (208) permettant d'amener l'air chaud comprimé jusqu'à la buse (213), moyennant quoi ledit air chaud comprimé amené à la buse constituant le gaz chaud.

12. Aéronef selon la revendication 11, ladite chambre (212) étant une chambre annulaire dans une section d'entrée (209) d'une nacelle de moteur (201), ladite paroi extérieure (210) étant une peau de lèvre d'entrée de la nacelle de moteur.

13. Procédé de dégivrage d'une partie d'aéronef (201), ladite partie d'aéronef comprenant une chambre (212) possédant une paroi extérieure (210) dont une surface externe (301) peut être sujette à la formation de givre, ledit procédé comprenant :
- l'injection du gaz chaud provenant d'une buse dans la chambre ;
- la réception du gaz chaud provenant de la buse dans un canal (305) d'un dispositif de mélange de gaz, le canal (305) s'étendant entre une entrée (405) et une sortie (406) du dispositif de mélange de gaz, le dispositif de mélange de gaz comprenant un élément induisant un tourbillonnement pour provoquer une aspiration du gaz provenant de la chambre dans le canal (305) avec un effet tourbillonnant lorsque le gaz chaud provenant de la buse est injecté dans le canal (305), l'élément induisant un tourbillonnement (601, 1001) comprenant divers évidements (601) à l'entrée du dispositif de mélange de gaz, **caractérisés en ce que**
le canal d'écoulement d'air (305) possède une section convergente (502) qui s'étend de l'entrée (405) vers la sortie (406) du dispositif de mélange de gaz (214), ladite section convergente (502) du canal d'écoulement d'air (305) étant suivie d'une section divergente (503) selon une direction allant vers la sortie (406) et ladite entrée (405) possédant un diamètre qui est supérieur à celui de la sortie (406).
